# EUROPEAN PATENT APPLICATION

(11) **EP 2 878 698 A1**
(43) Date of publication of application: **03.06.2015**
(21) Application number: 14154413.0
(22) Date of filing: 10.02.2014
(51) Int. Cl.: C23C 4/18, B23K 26/14, C23C 28/02, C23C 4/12, C21D 1/04, C23C 4/02, C23C 4/08, B24B 1/04

(54) **A method of improving machine life and repair of machine parts**

(30) Priority: 28.11.2013 PL 40629313
(71) Applicant: LaserTec Sp. z o.o., 43-100 Tychy (PL)
(72) Inventor: Kulak, Pawel, 43-100 Tychy (PL); Pochopien, Wieslaw, 43-500 Czechowice-Dziedzice (PL); Cibisz, Bartlomiej, 40-872 Katowice (PL); Zdrojewski, Bogdan, 40-750 Katowice (PL)
(74) Representative: Malcherek, Piotr

(57) **Abstract**

A method of improving machine life and repairing machine parts is characterised in that onto a part of a machine (1) at least one layer of metallic coating (2) is applied, preferably a composite in such a manner that an external layer of metallic coating (3) preferably a composite is applied by arc spray and subsequently the external layer of metallic coating (3) is subject to burnishing, preferably ultrasonic burnishing.

## Description

The present invention relates to a method of improving machine parts life and repair of machine parts.

The patent description PL 103851 "A method of repairing machine parts by hardfacing, in particular parts made from low carbon steel" discloses a method wherein a carbon steel wire or low-alloyed steel wire with carbon content from 0.35% to 0.85% is used and hardfacing is performed in steam shield.

The patent description PL 206686 "A method of creating a protective coating for machine parts" discloses a method for creating protective coating for machine parts in particular on a piston head or on a mushroom type exhaust valve of a two-stroke highpressure engine, wherein said coating is applied by hardfacing onto a selected surface.

The patent description PL 66039 "High-alloyed electrode for hardfacing" discloses an electrode which is characterised by the fact that the weld deposit contains additionally from 4 to 6% of carbon and from 4 to 8.5% of manganese.

The patent description PL67230 "A core welding wire for hardfacing of steel parts susceptible to abrasive wear" discloses a core welding wire which is characterised by the fact that the weight content of individual components in the wire calculated as pure component is: carbon - 0.4 to 0.7%, chromium - 3 to 5%, tungsten - 1.0 to 2.0%, manganese - 1,0 to 2,5%, silicon - 0.5 to 1.0%, titanium - 0.2 to 0.65, vanadium - 0.2 to 0,5%, rutile -1.5 to 3.5% and fluorite -1.5 to 4.0%, the remaining components are iron and impurities.

The advantage of the method according to the invention is that the protective coating created with the use of said method ensures high resistance to cavitation damage, which is achieved by an outside tight coating made from tin, additionally hardened in the process of roller burnishing, in particular ultrasonic burnishing.

Another advantage is the possibility to apply a brass coating e.g. aluminium tightly connected with steel or cast steel substrate transmitting mechanical load.

The essence of the invention is that at least one layer of metallic coating, preferably a composite, is applied on a machine part in such a manner that the external layer of the substance preferably a composite is applied by arc spray and after that the external layer of the metallic coating is burnished, preferably by ultrasonic burnishing.

The essence of the present invention also lies in the fact that the coating of metallic substance is applied by laser hardfacing with the use of at least one laser the power of which does not exceed 20 kW.

The method according to the invention is characterised by the fact that the external layer of the metallic coating with the thickness of 1 to 3 mm, preferably 2 mm, and porosity from 5% to 20 % is applied by ultrasonic spray HVOF onto the metallic coating prepared by shot blasting to the Ra2 level of surface roughness.

The essence of the present invention is that a composite of metal and/or metalloid reinforced with metal nanofibers and/or carbon nanofibers is applied as a metallic coating.

The method according to the invention allows to apply as the external layer of the metallic coating a material the chemical composition of which is as follows: copper and/or aluminium and/or iron and/or titanium and/or silicon and/or nickel and/or chromium and/or cadmium and/or beryllium and/or lead and/or phosphorus and/or tin and/or zirconium and/or niobium and/or zinc and/or arsenic and/or boron and/or antimony and/or silver and/or tungsten and/or carbon and impurities.

It is also possible to apply as the external layer of the metallic coating a material the chemical composition of which is as follows: copper and/or aluminium and/or iron and/or titanium and/or silicon and/or nickel and/or chromium and/or cadmium and/or beryllium and/or lead and/or phosphorus and/or tin and/or zirconium and/or niobium and/or zinc and/or arsenic and/or boron and/or antimony and/or silver and/or carbon, preferably in the form of nanomaterial and impurities.

The essence of the invention is also that the external layer of the metallic coating is subject to burnishing, preferably ultrasonic roller burnishing with the frequency ranging from 20 kHz to 1 GHz and with the use of ultrasonic generator or generators with max. power of 50 kW.

There is an alternative which consists in that the external layer of the metallic coating is subject to burnishing, preferably ultrasonic roller burnishing in a suspension which is an aqueous sodium polytungstate solution mixed with solids in the form of granules containing: aluminium oxide and/or silicon carbide and/or silicon oxide and/or diamond and/or regular boron nitride and/or zirconium silicate and/or zirconium oxide and/or tin oxide and/or basic aluminium fluorosilicate and/or aluminium silicate and/or iron silicate and/or chromium silicate and/or titanium carbide and/or tungsten carbide and/or tantalum carbide and/or zirconium carbide and/or boron carbide and/or hafnium oxide and/or hafnium carbide, wherein the granules' size does not exceed 30 mm.

Another alternative consists in that the external layer of the metallic coating is subject to burnishing, preferably ultrasonic roller burnishing in the suspension which is a molten base and/or salt in the temperature of max. 1000°C mixed with solids in the form of granules containing: aluminium oxide and/or silicon carbide and/or silicon oxide and/or diamond and/or regular boron nitride and/or zirconium silicate and/or zirconium oxide and/or tin oxide and/or basic aluminium fluorosilicate and/or aluminium silicate and/or iron silicate and/or chromium silicate and/or titanium carbide and/or tungsten carbide and/or tantalum carbide and/or zirconium carbide and/or boron carbide and/or hafnium oxide and/or hafnium carbide, wherein the granules' size does not exceed 30 mm.

The method according to the invention may also consist in that the external layer of the metallic coating is subject to burnishing, preferably ultrasonic roller burnishing in the suspension which is an aqueous solution of salt and/or base mixed with solids in the form of granules containing: aluminium oxide and/or silicon carbide and/or silicon oxide and/or diamond and/or regular boron nitride and/or zirconium silicate and/or zirconium oxide and/or tin oxide and/or basic aluminium fluorosilicate and/or aluminium silicate and/or iron silicate and/or chromium silicate and/or titanium carbide and/or tungsten carbide and/or tantalum carbide and/or zirconium carbide and/or boron carbide and/or hafnium oxide and/or hafnium carbide, wherein the granules' size does not exceed 30 mm.

The essence of the invention is that the external layer of the metallic coating is subject to burnishing, preferably ultrasonic roller burnishing in the suspension, preferably of tetrachloroethylene mixed with solids in the form of granules containing: aluminium oxide and/or silicon carbide and/or silicon oxide and/or diamond and/or regular boron nitride and/or zirconium silicate and/or zirconium oxide and/or tin oxide and/or basic aluminium fluorosilicate and/or aluminium silicate and/or iron silicate and/or chromium silicate and/or titanium carbide and/or tungsten carbide and/or tantalum carbide and/or zirconium carbide and/or boron carbide and/or hafnium oxide and/or hafnium carbide and/or solidified carbon dioxide, wherein the granules' size does not exceed 30 mm.

It is also possible that the suspension may contain: chlorinated hydrocarbons and/or aromatic hydrocarbons and/or aliphatic hydrocarbons and/or aqueous emulsions and/or water and/or aqueous solutions and/or silicone oils and/or plant fats and/or animal fats and/or mercury and/or gallium and/or carbon tetrachloride and/or carbon disulfide and/or chloroform and/or bismuth and/or tin and/or zinc and/or lead and/or glycerol and/or spirit and/or organosilicon polymer and/or silicone.

An important aspect of the present invention is the fact that the external layer of the metallic coating is subject to burnishing, preferably ultrasonic roller burnishing in the temperature from - 80°C to 1000°C.

An embodiment of the invention is a method of repairing the inside of the housing of a centrifugal water pump susceptible to cavitation damage.

The centrifugal pump is 1.8 m in diameter, and it was die-cast from cast steel the chemical composition of which is as follows: carbon 0.36%, silicon 0.7%, manganese 6.5%, chromium 1.8%, zirconium 3%, copper 2,4%, sulphur 0.06%, phosphorus 0.07%, solid or gaseous max. 1.2%, the remaining part is iron.

After filling the damage by welding and subsequent grinding and sandblasting with corundum, the inside of the pump's housing heated to the temperature of 280°C was subject to diode laser hardfacing with the power of 2.8 kW with aluminium brass powder the chemical composition of which was as follows: aluminium 11%, iron 2.7%, nickel 6.2%, impurities 1%, the remaining part was copper. A coating was applied, the thickness of which was 3 mm and hardness from 210 HV to 230 HV.

After CNC machining of the pump's housing hardfaced in the above described manner the surface of aluminium brass was shot blasted to the Ra 2 level of roughness, and after that nanopowder coating was thermally sprayed onto said surface, said nanopowder particle size being from 0.002 mm to 0.01 mm, and said nanopowder being an alloy of: tin approximately 90%, antimony 4%, copper 5%, cadmium 1% with the use of an arc spray gun, as a result a coating of 2 mm in thickness and 11% in porosity was attained.

After that the so prepared pump housing was sealed and subsequently filled with a mixture of ethylene tetrachloride with granules of aluminium oxide with the granule size ranging from 3 mm to 4.5 mm, then in the so made container a tip of the ultrasonic generator of power 4 kW generating ultrasounds of 30 kHz was immersed for 12 minutes. Roller burnishing improved the hardness of the 2 mm-thick zinc alloy coating from 6 HB to 32 HB as well as enhanced the bonding of said alloy with the brass of the substrate.

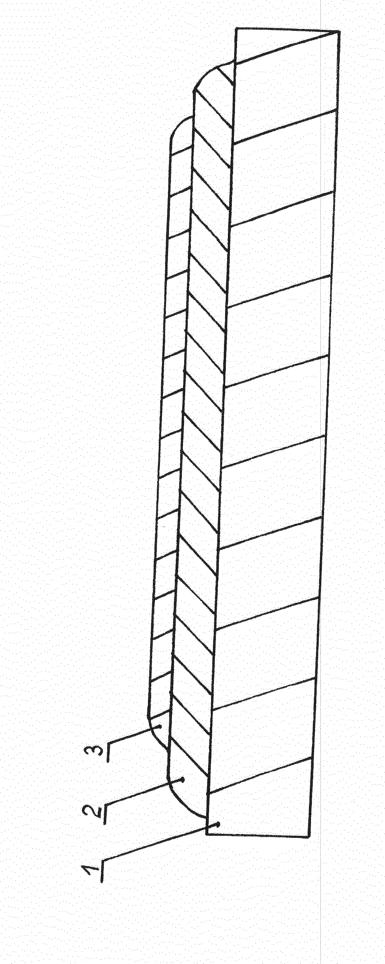

The enclosed drawing shows a cross sectional view of the machine (1), onto which at least one layer of metallic coating (2) was applied by hardfacing and onto said layer an external layer of metallic coating (3) was applied by arc spray, and subsequently said layer (3) was subject to ultrasonic burnishing.

## Claims

1. A method of improving life and repair of machine parts **characterised in that** onto a part of a machine (1) at least one layer of metallic coating (2) preferably a composite is applied by in such a manner that an external layer of metallic coating (3) preferably a composite is applied by arc spray, and subsequently said external layer of metallic coating (3) is subject to ultrasonic burnishing.

2. The method according to claim 1 **characterised in that** the layer of metallic coating (2) is applied by laser hardfacing with the use of at least one laser of power to 20 kW.

3. The method according to claim 1 **characterised in that** the external layer of metallic coating (3) the thickness of which is from 1 mm to 3 mm, preferably 2 mm and porosity is from 5% to 20% is applied by arc spray onto the layer of metallic coating (2) prepared by shot blasting to the Ra 2 level of roughness.

4. The method according to claim 1 **characterised in that** as the layer of metallic coating (2) a composite of metal and/or metalloid reinforced with metal nanofibers and/or carbon nanofibers is applied.

5. The method according to claim 1 **characterised in that** as the layer of metallic coating (2) a material is applied, the chemical composition thereof being as follows: copper and/or aluminium and/or iron and/or titanium and/or silicon and/or nickel and/or chromium and/or cadmium and/or beryllium and/or lead and/or phosphorus and/or tin and/or zirconium and/or niobium and/or zinc and/or arsenic and/or boron and/or antimony and/or silver and/or tungsten and/or carbon and impurities.

6. The method according to claim 1 **characterised in that** as the external layer of metallic coating (3) a material is applied, the chemical composition thereof being as follows: copper and/or aluminium and/or iron and/or titanium and/or silicon and/or nickel and/or chromium and/or cadmium and/or beryllium and/or lead and/or phosphorus and/or tin and/or zirconium and/or niobium and/or zinc and/or arsenic and/or boron and/or antimony and/or silver and/or carbon, preferably in the form of nanomaterial, and impurities.

7. The method according to claim 1 **characterised in that** the external layer of metallic coating (3) is subject to burnishing, preferably ultrasonic roller burnishing with frequency ranging from 20 kHz to 1 GHz and with the ultrasonic generator or generators power of max. 50 kW.

8. The method according to claim 1 **characterised in that** the external layer of metallic coating (3) is subject to burnishing, preferably ultrasonic roller burnishing in a suspension which is an aqueous sodium polytungstate solution mixed with solids in the form of granules containing: aluminium oxide and/or silicon carbide and/or silicon oxide and/or diamond and/or regular boron nitride and/or zirconium silicate and/or zirconium oxide and/or tin oxide and/or basic aluminium fluorosilicate and/or aluminium silicate and/or iron silicate and/or chromium silicate and/or titanium carbide and/or tungsten carbide and/or tantalum carbide and/or zirconium carbide and/or boron carbide and/or hafnium oxide and/or hafnium carbide, wherein the granules' size does not exceed 30 mm.

9. The method according to claim 1 **characterised in that** the external layer of metallic coating (3) is subject to burnishing, preferably ultrasonic roller burnishing in a suspension which is a molten base and/or salt in the temperature of max. 1000°C mixed with solids in the form of granules containing: aluminium oxide and/or silicon carbide and/or silicon oxide and/or diamond and/or regular boron nitride and/or zirconium silicate and/or zirconium oxide and/or tin oxide and/or basic aluminium fluorosilicate and/or aluminium silicate and/or iron silicate and/or chromium silicate and/or titanium carbide and/or tungsten carbide and/or tantalum carbide and/or zirconium carbide and/or boron carbide and/or hafnium oxide and/or hafnium carbide, wherein the granules' size does not exceed 30 mm.

10. The method according to claim 1 **characterised in that** the external layer of metallic coating (3) is subject to burnishing, preferably ultrasonic roller burnishing in a suspension which is an aqueous solution of salt and/or base mixed with solids in the form of granules containing: aluminium oxide and/or silicon carbide and/or silicon oxide and/or diamond and/or regular boron nitride and/or zirconium silicate and/or zirconium oxide and/or tin oxide and/or basic aluminium fluorosilicate and/or aluminium silicate and/or iron silicate and/or chromium silicate and/or titanium carbide and/or tungsten carbide and/or tantalum carbide and/or zirconium carbide and/or boron carbide and/or hafnium oxide and/or hafnium carbide, wherein the granules' size does not exceed 30 mm.

11. The method according to claim 1 **characterised in that** the external layer of metallic coating (3) is subject to burnishing, preferably ultrasonic roller burnishing in a suspension, preferably ethylene tetrachloride mixed with solids in the form of granules containing: aluminium oxide and/or silicon carbide and/or silicon oxide and/or diamond and/or regular boron nitride and/or zirconium silicate and/or zirconium oxide and/or tin oxide and/or basic aluminium fluorosilicate and/or aluminium silicate and/or iron silicate and/or chromium silicate and/or titanium carbide and/or tungsten carbide and/or tantalum carbide and/or zirconium carbide and/or boron carbide and/or hafnium oxide and/or hafnium carbide and/or solidified carbon dioxide, wherein the granules' size does not exceed 30 mm.

12. The method according to claim 1 **characterised in that** the suspension may contain: chlorinated hydrocarbons and/or aromatic hydrocarbons and/or aliphatic hydrocarbons and/or aqueous emulsions and/or water and/or aqueous solutions and/or silicone oils and/or plant fats and/or animal fats and/or mercury and/or gallium and/or carbon tetrachloride and/or carbon disulfide and/or chloroform and/or bismuth and/or tin and/or zinc and/or lead and/or glycerol and/or spirit and/or organosilicon polymer and/or silicone.

13. The method according to claim 1 **characterised in that** the external layer of metallic coating (3) is subject to burnishing, preferably ultrasonic roller burnishing in the temperature in the range between - 80°C to 1000°C.
